# EUROPEAN PATENT APPLICATION

(11) **EP 3 747 625 A2**
(43) Date of publication of application: **09.12.2020**
(21) Application number: 20175591.5
(22) Date of filing: 20.05.2020
(51) Int. Cl.: B29C 53/02, B29C 53/04, B29C 63/04, B29C 63/16

(54) **METHOD AND APPARATUS FOR EDGE FOLDING COMPONENT OPENINGS**

(30) Priority: 03.06.2019 US 201916429359
(71) Applicant: Faurecia Interior Systems, Inc., Auburn Hills, MI 48326 (US)
(72) Inventor: STEPANSKI, David, West Bloomfield, MI 48324 (US)
(74) Representative: Lavoix

(57) **Abstract**

A method and apparatus includes a component having at least one opening defined by an edge and a layer of material positioned along the edge. An expandable member is positionable within a tool and is configured to operate between a non-expanded position and an expanded position in which the expandable member forces the layer of material to be folded over the edge.

## Description

### TECHNICAL FIELD

The subject disclosure generally relates to a method and apparatus that uses an expandable member to provide edge folding for component openings.

### BACKGROUND OF THE INVENTION

Interior components, such as door panels, trim panels, instrument panels, glove boxes, etc., include small openings that are defined by an opening edge. Foil material is typically folded along these edges to provide a finished edge. This process has traditionally been performed by hand which is labor intensive, time consuming, and cost prohibitive. More efficient solutions for edge folding could address these issues and further improve overall quality of the finished edges.

### SUMMARY OF THE INVENTION

In one exemplary embodiment, an apparatus includes a component having at least one opening defined by an edge and a layer of material positioned along the edge. An expandable member is positionable within a tool and is configured to operate between a non-expanded position and an expanded position in which the expandable member forces the layer of material to be folded over the edge.

In another embodiment according to the previous embodiment, the expandable member comprises an inflatable seal.

In another embodiment according to any of the previous embodiments, a resilient member is moved during expansion of the expandable member to fold the layer of material over the edge.

In another embodiment according to any of the previous embodiments, the resilient member comprises a spring.

In another embodiment according to any of the previous embodiments, a heater is configured to heat the layer of material.

In another embodiment according to any of the previous embodiments, the layer of material comprises a foil.

In another embodiment according to any of the previous embodiments, the component comprises an automotive interior component having at least one panel portion with the at least one opening.

In another exemplary embodiment, an apparatus includes a tool configured to hold a component having at least one opening defined by an edge. The component further includes a layer of material positioned along the edge. An inflatable seal is associated with the tool and is configured to operate between a deflated position and an inflated position. A resilient member is moved during inflation of the inflatable seal to fold the layer of material over the edge.

In another embodiment according to any of the previous embodiments, the tool includes a hot air supply to heat the layer of material.

In another embodiment according to any of the previous embodiments, the component comprises an automotive interior component having at least one panel portion with the at least one opening, and wherein the layer of material comprises a foil.

In another exemplary embodiment, a method includes providing a component having at least one opening defined by an edge, positioning a layer of material along the edge, and expanding an expandable member from a non-expanded position to an expanded position to fold the layer of material over the edge.

In another embodiment according to any of the previous embodiments, the method includes positioning a resilient member about an outer periphery of the expandable member and moving the resilient member during expansion of the expandable member to fold the layer of material over the edge.

In another embodiment according to any of the previous embodiments, the expandable member comprises an inflatable seal and the resilient member comprises a spring.

In another embodiment according to any of the previous embodiments, the method includes heating the layer of material prior to and/or during folding of the layer of material over the edge.

In another embodiment according to any of the previous embodiments, the method includes positioning the component within a tool such that a distal end of the layer of material is located in a folding cavity, and supplying heated air into the folding cavity to heat the layer of material.

These and other features may be best understood from the following drawings and specification.

### BRIEF DESCRIPTION OF THE DRAWINGS

Figure 1 is an automotive interior component with an opening defined by an edge.
Figure 2A is a schematic view of the component with a layer of material along the edge being loaded into a lower tool.
Figure 2B is a top view of Figure 2A with the part as loaded into the tool.
Figure 3 is a schematic view of an upper tool closing on the lower tool.
Figure 4 is a schematic view of heating the layer of material in the tool.
Figure 5 is a schematic view of expanding an expandable member within the tool to fold the layer of material over the edge.
Figure 6 is a schematic view of the expandable member returning to a non-expanded position.
Figure 7 is a schematic view of the upper tool opening for removal of the component.
Figure 8 is a schematic view of the component being removed from the lower tool.
Figure 9 is a schematic view of an alternate embodiment.

### DETAILED DESCRIPTION

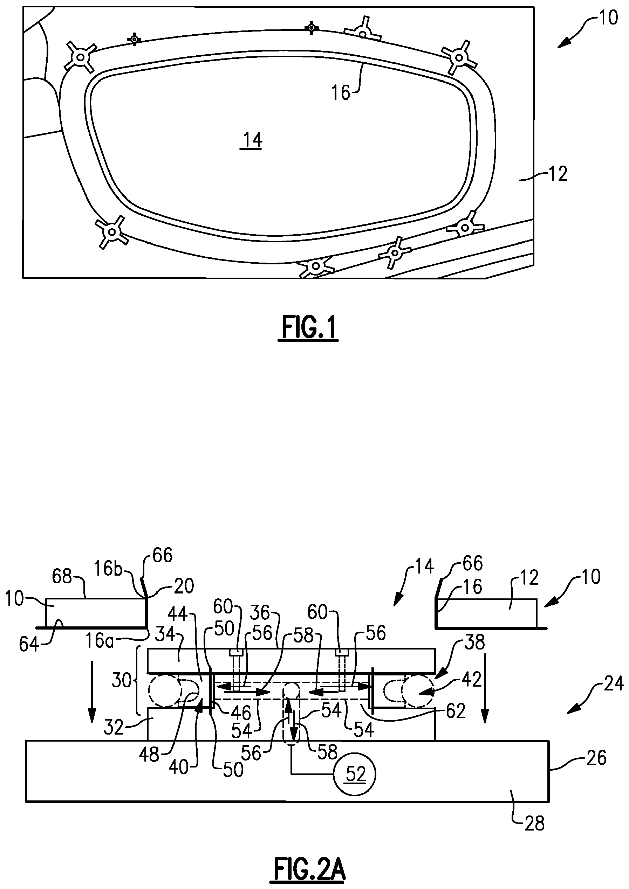

Figure 1 shows an interior component 10 for a vehicle. The interior component 10 can comprise a door panel, trim panel, instrument panel, glove box, etc. for example. The interior component 10 includes a body or panel portion 12 within at least one opening 14. In one example the panel portion 12 is a generally flat panel or plate of sheet metal with the opening 14 extending through a thickness of the panel portion 12. The opening 14 is defined by an edge 16 that extends about a periphery of the opening 14. The opening 14 can comprise any shape or size but is usually a relatively small opening as compared to the panel portion 12. For example, the opening 14 can comprise an opening for a latch handle, glove box release, door handle, ect.

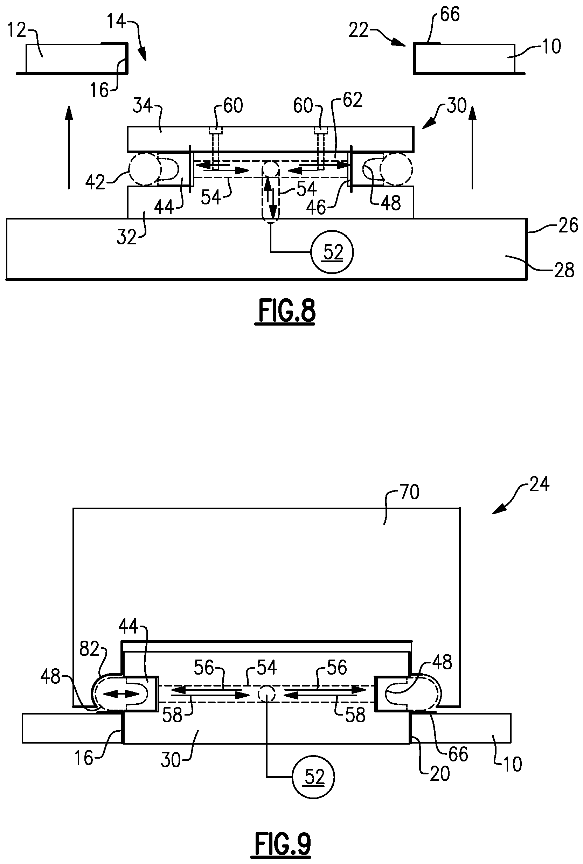

In one example, a layer of material 20 (Figure 2A) is folded over the edge 16 of the opening 14 to provide a finished edge as indicated at 22 in Figure 8. A tool 24, as shown in Figures 2A-9, is used to fold the layer of material 20 along the edge 16. In the example of Figure 2A, the tool 24 includes a lower tool 26 with a base 28 and a nest 30 that protrudes upwardly from the base 28. The nest 30 includes a lower end portion 32 and an upper end portion 34 that defines a top surface 36 of the nest 30. A groove or recess 38 extends around an outer periphery of the nest 30 at a location between the lower 32 and upper 34 end portions.

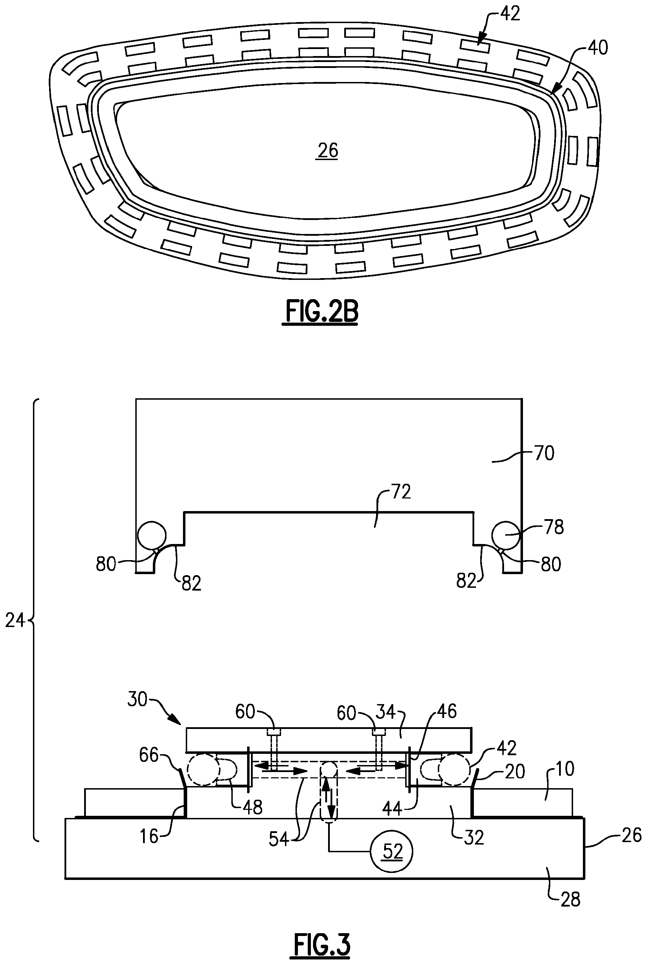

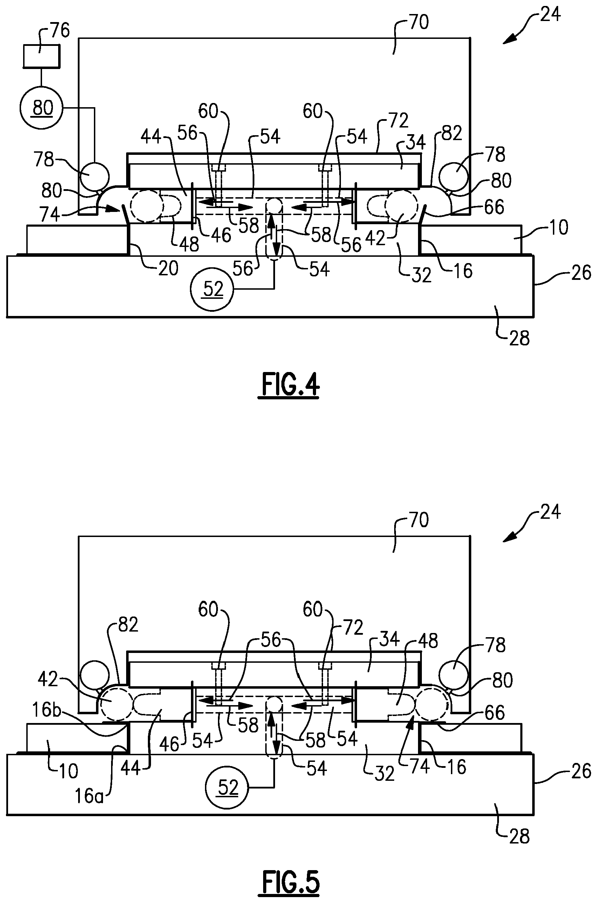

An expandable member 40 is positioned within the recess 38 and is configured to operate between a non-expanded position (Figure 4) and an expanded position (Figure 5) in which the expandable member 40 forces the layer of material 20 to be bent or folded over the edge 16. In one example, a resilient member 42 is also positioned within the recess 38 (Figure 2A) at a location that is outward of the expandable member 40. Figure 2B shows a top view of the lower tool 26 with the resilient member 42 surrounding an outer periphery of the expandable member 40. The resilient member 42 is moved during expansion of the expandable member 40 to fold the layer of material 20 over the edge 16.

In one example, the expandable member 40 comprises an inflatable seal 44 that includes a lip 46 that is held fixed to the lower tool 26 and an expandable bulb portion 48 that is movable between deflated and inflated positions. In one example, the nest 30 includes a groove 50 (Figure 2A) that receives the lip 46 of the seal 44. During inflation, the bulb portion 48 expands or inflates radially outwardly about an entire periphery of the seal 44 to force the resilient member 42 radially outwardly in all directions to engage the layer of material 20 and fold the material 20 over the edge 16 that surrounds the opening 14. As shown in Figure 2A, the edge 16 extends through a thickness of the panel portion 12 from an inner location at 16a to an outer location at 16b. As the bulb portion 48 expands or inflates radially outwardly in all directions, the layer of material 20 is folded to extend completely over the edge 16 at the outer location 16b to rest against an outward surface of the component 10 (Figure 5).

In one example, the resilient member 42 comprises a spring element, such as a coil spring for example. The resilient member 42 provides for an increased rigidity to press against the layer of material 20 for folding purposes. The resilient member 42 also facilitates returning the seal 44 to the deflated position.

In one example, a fluid supply 52 is used to provide a pressurized fluid that is used to inflate and deflate the bulb portion 48. The bulb portion 48 has an open internal cavity that is sealed by an outer membrane or resilient seal body. The fluid supply 52 provides pressurize fluid, such as air for example, that is directed through internal channels 54 in the nest 30 to enter the open internal cavity of the bulb portion 48 for inflation purposes as indicated by the arrows 56. A vacuum can be applied, as indicated at arrows 58, to deflate the bulb portion 48 via the internal channels 54.

In one example, the upper end portion 34 of the nest 30 is selectively removable from the nest 30 such that the seal 44 and resilient member 42 can be accessed for replacement, inspection, maintenance, and/or repair. In one example, fasteners 60 are used to secure the upper end portion 34 to a narrowing neck portion 62 that is formed between the upper 34 and lower 32 end portions due to the recess 38.

The process of folding the layer of material 20 over the edge 16 will be described with regard to one example embodiment as shown in Figures 2A to 8. As shown in Figure 2A, the component 10 has a layer of material 20 that is positioned with the opening 14 such that the material extends along a bottom surface 64 of the component 10 and along an entire surface of the edge 16 that extends around the periphery of the opening 14. In one example, the layer of material comprises a foil or other similar material. The material may additionally include an adhesive coating on an inner surface of the material to improve adhesion of the foil to the component 10. The layer of material 20 extends to a distal edge or end portion 66 that is spaced apart from an upper surface 68 of the component 10. The distal end portion 66 can extend in a vertical direction relative to the surface of the edge 16, or can be bent slightly, radially outward as shown.

The component 10 with the layer of material 20 is then placed within the lower tool 26 such that the nest 30 protrudes through the opening 14 as shown in Figure 3. An outer peripheral surface of the lower end portion 32 of the nest 30 abuts against an outer surface of the layer of material 20 such that the opening 14 in the component 10 is seated firmly on the nest 30.

An upper tool 70 is then lowered over the lower tool 26 to close the tool 24 as shown in Figure 4. The upper tool 70 includes a recessed area 72 that receives the nest 30 when the tool 24 is closed. The distal end portion 66 of the layer of material 20 is positioned within a folding cavity 74 formed between the upper 70 and lower 26 tools. In one example, the upper tool 70 includes a heater or heating mechanism 76 that is used to supply heat to the folding cavity 74 to heat the material 20. In one example, the heating mechanism 76 comprises an electrode or other similar heating element. In one example, the heating mechanism 76 heats air that is then supplied to a hot air tube or duct 78 located in the upper tool 70. The duct 78 could optionally, or additionally, be located in the lower tool 26. In one example, a separate air supply 80 from the fluid supply 52 is used to supply air for heating purposes.

Once the tool 24 closes as shown in Figure 4, air heated to a desired temperature is supplied to the folding cavity 74 via a channel 80 for a sufficient length of time to heat the material, and optionally the adhesive, such that the material softens or becomes more pliant for folding purposes. The heating is then turned off to allow for the folding action.

As shown in Figure 5, the bulb potion 48 of the seal 44 is inflated via the fluid supply 52, which pushes the resilient member 42 outward to engage the distal end portion 66 of the layer of material 20. The inflation occurs such that the movement of the resilient member 42 occurs simultaneously about the entire periphery of the seal 44. The upper tool 70 includes a stop or shoulder surface 82 that prevents the resilient member 42 from separating from the lower tool 26. This shoulder surface 82 also prevents the seal 44 from overinflating. The seal 44 is inflated such that it holds the resilient member 42 on top of the distal end portion 66 of the material 20 for a pre-determined amount of time. The pre-determined amount of time should be sufficient such that adhesive sets to provide a fixed and permanent attachment of the material 20 about the edge 16 of the opening 14.

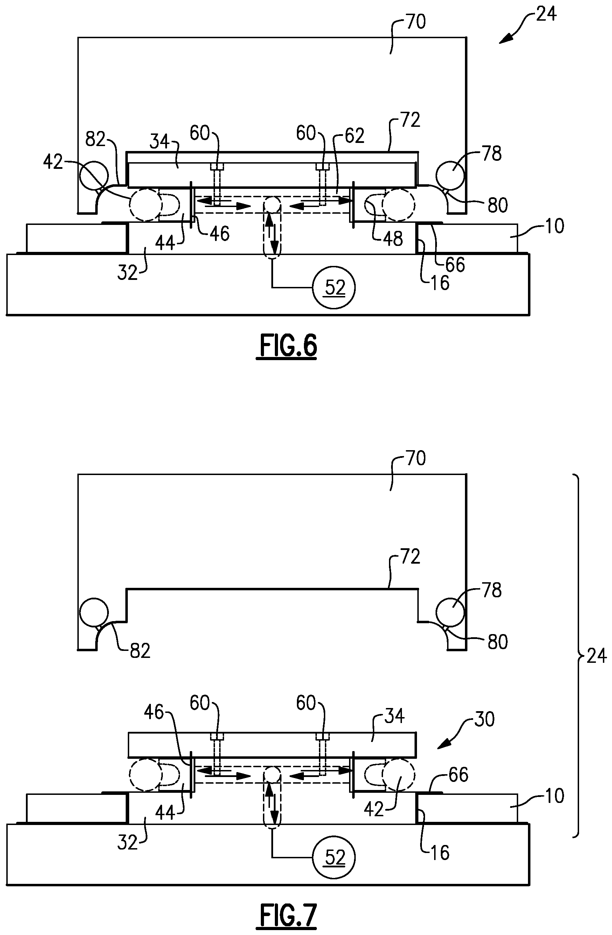

Once the pre-determined amount of time has passed, the seal 44 is deflated as shown in Figure 6. The resilient member 42 also returns to its initial position within the recess 38 of the nest 30. The upper tool 70 is then raised, as shown in Figure 7, such that the component 10 with the finished edge 22 can be removed from the tool 24 as shown in Figure 8. Once removed, a new component 10 can be loaded into the tool 24 for edge folding.

While an inflatable seal 44 is shown as an example, other expandable members or structures such as bellows, springs, etc., which can expand outward in a radial direction could also be used.

Additionally, while a resilient member 42 is shown in combination with the inflatable seal 44 in Figures 2A-8, the tool 24 may only require the inflatable seal alone. An example embodiment is shown in Figure 9 that uses only the seal 44 to fold the layer of material 20 about the edge 16 of the opening 14. Figure 9 also shows an example where heating of the material 20 is not required.

The subject disclosure provides tooling to aid in edge folding material in small openings on automotive components. This tooling provides beneficial features such as improved quality of the finished component, faster edge folding process, lower assembly costs, and less scrap as compared to traditional edge folding by hand.

Although an embodiment of this invention has been disclosed, a worker of ordinary skill in this art would recognize that certain modifications would come within the scope of this invention. For that reason, the following claims should be studied to determine the true scope and content of this invention.

## Claims

1. An apparatus comprising:
a component having at least one opening defined by an edge;
a layer of material positioned along the edge;
an expandable member positionable within a tool and configured to operate between a non-expanded position and an expanded position in which the expandable member forces the layer of material to be folded over the edge.

2. The apparatus according to claim 1, wherein the expandable member comprises an inflatable seal.

3. The apparatus according to claim 1 or 2, including a resilient member that is moved during expansion of the expandable member to fold the layer of material over the edge.

4. The apparatus according to claim 3, wherein the resilient member comprises a spring.

5. The apparatus according to any one of claims 1 to 4, including a heater configured to heat the layer of material.

6. The apparatus according to any one of claims 1 to 5, wherein the layer of material comprises a foil.

7. The apparatus according to any one of claims 1 to 6, wherein the component comprises an automotive interior component having at least one panel portion with the at least one opening.

8. An apparatus comprising:
a tool configured to hold a component having at least one opening defined by an edge, wherein the component further includes a layer of material positioned along the edge;
an inflatable seal associated with the tool and configured to operate between a deflated position and an inflated position; and
a resilient member that is moved during inflation of the inflatable seal to fold the layer of material over the edge.

9. The apparatus according to claim 8, wherein the tool includes a hot air supply to heat the layer of material.

10. The apparatus according to claim 8 or 9, wherein the component comprises an automotive interior component having at least one panel portion with the at least one opening, and wherein the layer of material comprises a foil.

11. A method comprising;
providing a component having at least one opening defined by an edge; positioning a layer of material along the edge;
expanding an expandable member from a non-expanded position to an expanded position to fold the layer of material over the edge.

12. The method according to claim 11, including positioning a resilient member about an outer periphery of the expandable member and moving the resilient member during expansion of the expandable member to fold the layer of material over the edge.

13. The method according to claim 12, wherein the expandable member comprises an inflatable seal and the resilient member comprises a spring.

14. The method according to any one of claims 11 to 13, including heating the layer of material prior to and/or during folding of the layer of material over the edge.

15. The method according to claim 14, including positioning the component within a tool such that a distal end of the layer of material is located in a folding cavity, and supplying heated air into the folding cavity to heat the layer of material.
